# EUROPEAN PATENT APPLICATION

(11) **EP 4 793 403 A1**
(43) Date of publication of application: **19.08.2026**
(21) Application number: 24876990.3
(22) Date of filing: 13.09.2024
(51) Int. Cl.: C23C 2/12, C22C 21/00, C22C 21/10, C23C 2/06, C21D 9/46, C22C 30/00, C22C 38/00, C22C 38/60, C23C 2/02, C23C 2/26

(54) **PLATED STEEL SHEET**

(30) Priority: 12.10.2023 JP 2023176702
(71) Applicant: Nippon Steel Corporation, Tokyo 100-8071 (JP)
(72) Inventor: HAYASHIDA, Shota, Tokyo 100-8071 (JP); MITSUNOBU, Takuya, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2024/032833
(87) International publication number: WO 2025/079391

(57) **Abstract**

Provided is a plated steel sheet comprising a base steel sheet and a plating layer formed on the surface of the base steel sheet, wherein the plating layer has a predetermined chemical composition, and includes an Fe-Al phase positioned at an interface with the base steel sheet and a main layer positioned on the Fe-Al phase, at a cross-section of the main layer, an area ratio of Mg-Al-Zn-Si-based intermetallic compound phases with an Al content of 10 mass% or more is 0.010% or more, the Fe-Al phase contains, by mass%, Si: 3.0 to 15.0% and Zn: 2.0 to 15.0%, and an amount of deposition of the plating layer is 20 g/m² or more per side.

## Description

### FIELD

The present invention relates to a plated steel sheet

### BACKGROUND

Hot stamping (hot pressing) is known as a technique for press-forming a material, which is difficult to form, such as a high strength steel sheet. Hot stamping is a technique of hot forming which heats then forms a material to be formed. This technique heats then forms the material, and therefore at the time of forming, the steel material is soft and has good formability. Therefore, even a high strength steel material can be formed into a complex shape with a good precision. Further, it is hardened at the same time as being formed by the press dies, and therefore a formed steel material is known to have sufficient strength.

In relation to this, in the past, plated steel sheets for hot stamping have been studied from various angles.

For example, PTL 1 describes a steel sheet containing 2.0 to 24.0 wt% of zinc, 7.1 to 12.0 wt% of silicon, optionally 1.1 to 8.0 wt% of magnesium, and optionally an additional element selected from Pb, Ni, Zr, or Hf, having a weight content of any additional element lower than 0.3 wt%, having a balance of aluminum and any unavoidable impurities and residual elements, and covered by a metal coating with an Al/Zn ratio of more than 2.9. Further, PTL 1 teaches that a metal coating with an Al/Zn ratio of more than 2.9 has a high sacrificial corrosion protective action.

PTL 2 describes an aluminum alloy plated steel sheet comprising a base steel sheet and an aluminum alloy plating layer formed on the base steel sheet, in which the aluminum alloy plating layer contains, by wt%, Zn: 21 to 35%, Si: 1 to 6.9%, Fe: 2 to 12%, and a balance of Al and other unavoidable impurities. Further, PTL 2 teaches that by controlling the Al/(Zn+Si) of the aluminum alloy plating layer to 1.3 to 2.6, it is possible to secure weldability and corrosion resistance.

### [CITATION LIST]

### [PATENT LITERATURE]

[PTL 1] Japanese Unexamined Patent Publication No. 2018-528324
[PTL 2] Japanese Unexamined Patent Publication No. 2022-550142

### SUMMARY

### [TECHNICAL PROBLEM]

For example, if using a plated steel sheet such as described in PTLs 1 and 2, more specifically a plated steel sheet containing a relatively large amount of Al as a constituent in the plating layer, in hot-stamp forming, sometimes at the time of heating in the hot-stamp forming, the plating layer and base iron (base steel sheet) become alloyed resulting in a drop in corrosion resistance.

Therefore, the present invention has as its object the provision of a plated steel sheet provided with a plating layer containing Al in which improved corrosion resistance can be exhibited even when used for hot-stamp forming.

### [SOLUTION TO PROBLEM]

The inventors studied how to achieve the above object and as a result discovered that by forming a plating layer comprised of an Al-Zn-Mg-Si-based plating in a predetermined amount or more of deposition and suitably controlling the chemical composition and structure of the plating layer, it is possible to achieve excellent corrosion resistance even after being used for hot-stamp forming and thereby completed the present invention.

The present invention able to achieve the above object is as follows:
(1) A plated steel sheet comprising a base steel sheet and a plating layer formed on a surface of the base steel sheet, wherein
   a chemical composition of the plating layer comprises, by mass%,
   Zn: 5.0 to 40.0%,
   Si: 0.1 to 15.0%,
   Fe: 0.5 to 25.0%,
   Mg: 0.005 to 3.000%,
   Ni: 0 to 0.500%,
   Ca: 0 to 3.000%,
   Sb: 0 to 0.500%,
   Pb: 0 to 0.500%,
   Cu: 0 to 1.000%,
   Sn: 0 to 1.000%,
   Ti: 0 to 1.000%,
   Cr: 0 to 1.000%,
   Nb: 0 to 1.000%,
   Zr: 0 to 1.000%,
   Mn: 0 to 1.000%,
   Mo: 0 to 1.000%,
   Ag: 0 to 1.000%,
   Li: 0 to 1.000%,
   La: 0 to 0.500%,
   Ce: 0 to 0.500%,
   B: 0 to 0.500%,
   Y: 0 to 0.500%,
   Sr: 0 to 0.500%,
   In: 0 to 0.500%,
   Co: 0 to 0.500%,
   Bi: 0 to 0.500%,
   P: 0 to 0.500%,
   W: 0 to 0.500%, and
   balance: Al and impurities, and
   a total content of Ni, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
   the plating layer includes an Fe-Al phase positioned at an interface with the base steel sheet and a main layer positioned on the Fe-Al phase,
   at a cross-section of the main layer, an area ratio of Mg-Al-Zn-Si-based intermetallic compound phases with an Al content of 10 mass% or more is 0.010% or more,
   the Fe-Al phase contains, by mass%, Si: 3.0 to 15.0% and Zn: 2.0 to 15.0%, and
   an amount of deposition of the plating layer is 20 g/m² or more per side.
(2) The plated steel sheet according to (1), wherein
   the chemical composition of the plating layer comprises, by mass%,
   Zn: 10.0 to 35.0%,
   Si: 0.5 to 6.0%, and
   Mg: 0.050 to 3.000%, and
   an area ratio of the Mg-Al-Zn-Si-based intermetallic compound phases is 0.050% or more.
(3) The plated steel sheet according to (1) or (2), wherein, in a depth direction of the base steel sheet from an interface of the base steel sheet and the plating layer, a depth where a C concentration is 0.10 mass% or less is 0.5 µm or more.

### [ADVANTAGEOUS EFFECTS OF INVENTION]

According to the present invention, it is possible to provide a plated steel sheet provided with a plating layer containing Al in which improved corrosion resistance can be exhibited even when used for hot-stamp forming.

### BRIEF DESCRIPTION OF DRAWINGS

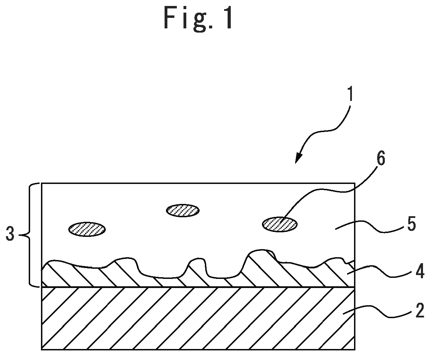

FIG. 1 is a schematic cross-sectional view of a plated steel sheet according to an embodiment of the present invention.

### DESCRIPTION OF EMBODIMENT

### <Plated Steel Sheet>

The plated steel sheet according to an embodiment of the present invention is provided with a plating layer formed on a surface of a base steel sheet, wherein
a chemical composition of the plating layer comprises, by mass%,
Zn: 5.0 to 40.0%,
Si: 0.1 to 15.0%,
Fe: 0.5 to 25.0%,
Mg: 0.005 to 3.000%,
Ni: 0 to 0.500%,
Ca: 0 to 3.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
balance: Al and impurities, and
a total content of Ni, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
the plating layer includes an Fe-Al phase positioned at an interface with the base steel sheet and a main layer positioned on the Fe-Al phase,
at a cross-section of the main layer, an area ratio of Mg-Al-Zn-Si-based intermetallic compound phases with an Al content of 10 mass% or more is 0.010% or more,
the Fe-Al phase contains, by mass%, Si: 3.0 to 15.0% and Zn: 2.0 to 15.0%, and
an amount of deposition of the plating layer is 20 g/m² or more per side.

As stated previously, if using a plated steel sheet containing a relatively large amount of Al as a constituent in the plating layer in hot-stamp forming, at the time of heating in the hot-stamp forming, sometimes the plating layer and base iron (base steel sheet) become alloyed and due to this the corrosion resistance falls. Explained in more detail, for example, if hot-stamp forming a plated steel sheet provided with a plating layer comprised of a conventional Al-Si-based plating, at the time of high temperature heating in hot-stamp forming (for example, at the time of heating at about 900°C or a temperature higher than that), the plating layer and the base steel sheet become alloyed and a plating layer containing mainly an Fe₂ Al₅ phase is formed after the hot-stamp forming. However, in the plating layer, other than an Fe₂ Al₅ phase, sometimes an Fe-Al-based intermetallic compound containing a relatively large amount of Si, in particular an Fe-Al-Si phase containing 5 mass% or more of Si, is also formed in a relatively large amount. In such a case, sometimes dissimilar metal corrosion (galvanic corrosion) occurs between the Fe₂ Al₅ phase and Fe-Al-Si phase. The corrosion resistance of the hot-stamp formed body falls as a result.

Therefore, the inventors studied in particular the chemical composition and structure of a plating layer so as to provide a plated steel sheet able to exhibit excellent corrosion resistance even when used for hot-stamp forming. As a result, the inventors discovered that in a plating layer comprised of an Al-Zn-Mg-Si-based plating of an Al-Si-based plating plus Zn and Mg, it is important to suitably set the chemical composition and amount of deposition and suitably control the chemical composition of the Fe-Al phase in the plating layer formed at the interface with the base steel sheet and further to include in the main layer positioned on the Fe-Al phase a specific Al-Zn-Si-based intermetallic compound phase. Explained in more detail, first, the inventors discovered that by controlling the Si content of the overall plating layer of the plated steel sheet to 0.1 to 15.0 mass%, in the hot-stamp formed body, it is possible to improve the plating adhesion while suppressing the formation of an Fe-Al-Si phase of an Fe-Al-based intermetallic compound containing a relatively large amount of Si. Similarly, the inventors discovered that by controlling the Zn content of the overall plating layer to 5.0 to 40.0 mass% and, further, controlling the amount of plating deposition to 20 g/m² or more, it is possible to effectively realize the sacrificial corrosion preventive action of Zn at the plating layer and thereby possible to improve the corrosion resistance of the hot-stamp formed body. Next, the inventors discovered that suitably controlling the Si and Zn contents of the overall plating layer as above plus making the Fe-Al phase formed at the interface with the base steel sheet contain Si and Zn in predetermined amounts, more specifically making the Fe-Al phase contain, by mass%, Si: 3.0 to 15.0% and Zn: 2.0 to 15.0%, it is possible to further control the formation of the Fe-Al-Si phase and possible to make Zn be dissolved in the Fe₂ Al₅ phase formed after the hot-stamp forming and thereby possible to remarkably improve the corrosion resistance of the hot-stamp formed body.

While not intending to be bound to any specific theory, it may be that by making the Fe-Al phase contain Si in 3.0 to 15.0 mass%, much of the Si present in the plating layer is trapped in the Fe-Al phase. The Fe-Al-Si phase is an intermetallic compound containing a relatively large amount of Si. It may be that by trapping much of the Si in the Fe-Al phase, it becomes possible to suppress formation of the Fe-Al-Si phase at the time of high temperature heating of hot-stamp forming. On the other hand, by making the Fe-Al phase contain Zn in 2.0 to 15.0 mass%, it is possible to make Zn having a sacrificial corrosion preventive action dissolve in the Fe₂ Al₅ phase formed by alloying at the time of high temperature heating in hot-stamp forming and thereby improve the corrosion resistance of the plating layer after hot-stamp forming. Therefore, according to the plated steel sheet according to an embodiment of the present invention provided with a plating layer with the Fe-Al phase formed at the interface with the base steel sheet containing by, mass%, Si: 3.0 to 15.0% and Zn: 2.0 to 15.0%, even if used for hot-stamp forming, due to the combination of the effect of suppression of formation of the Fe-Al-Si phase able to cause galvanic corrosion with the Fe₂ Al₅ phase and the effect of improvement of the corrosion resistance of the plating layer containing the Fe₂ Al₅ phase due to the dissolution of Zn, it becomes possible to achieve excellent corrosion resistance in the formed body after hot-stamp forming.

Furthermore, the inventors studied improvement of the corrosion resistance from the viewpoint of improvement of the chemical convertibility. In general, if the chemical convertibility falls, sometimes regions called "bald spots" arise where no chemical conversion coating is formed. In such a case, the corrosion resistance falls after painting. Conversely speaking, by improving the chemical convertibility of the formed body after hot-stamp forming, it becomes possible to improve the corrosion resistance after painting at the formed body. As a result of study, the inventors discovered that by including, in the main layer positioned on the Fe-Al phase corresponding to the interfacial alloy layer, specific Mg-Al-Zn-Si-based intermetallic compound phases, more specifically Mg-Al-Zn-Si-based intermetallic compound phases with an Al content of 10 mass% or more, in an area ratio of 0.010% or more, it is possible to remarkably improve the chemical convertibility in a formed body after hot-stamp forming. While not intending to be bound by any specific theory, it may be that by including in the main layer the above-mentioned Mg-Al-Zn-Si-based intermetallic compound phases, it is possible to modify the oxides formed at the surface at the time of high temperature heating at hot-stamp forming by the Mg-Al-Zn-Si-based intermetallic compound phases, more specifically, possible to modify them by the Mg in the Mg-Al-Zn-Si-based intermetallic compound phases, and due to this possible to improve the chemical convertibility of the hot-stamp formed body. This will be explained in detail below:

FIG. 1 is a cross-sectional schematic view of a plated steel sheet according to an embodiment of the present invention. Referring to FIG. 1, the plated steel sheet 1 according to an embodiment of the present invention is provided with a base steel sheet 2 and a plating layer 3 formed on the surface of the base steel sheet 2. The plating layer 3 includes an Fe-Al phase 4 positioned at the interface with the base steel sheet 2 and a main layer positioned on the Fe-Al phase 4 (i.e., surface side of plated steel sheet 1). Further, in FIG. 1, in the main layer 5, there are Mg-Al-Zn-Si-based intermetallic compound phases 6 with an Al content of 10 mass% or more present. In general, Mg is present as an Mg₂ Si phase, etc., in the plating layer. On the other hand, the plating layer 3 of the plated steel sheet 1 according to an embodiment of the present invention contains a relatively large amount of Al, therefore its surface is covered by an oxide film formed from Al-containing oxides, etc. Here, the Mg₂ Si phase has a relatively high melting point, therefore is resistant to oxidation even at the time of high temperature heating at hot-stamp forming. For this reason, it may be that this acts on the oxide film formed from Al-containing oxides, etc., making it impossible to modify the oxide film. As opposed to this, the Mg-Al-Zn-Si-based intermetallic compound phases 6 with an Al content of 10 mass% or more according to an embodiment of the present invention are lower in melting point compared with the Mg₂ Si phase and have the property of being easily oxidized. Therefore, by the main layer 5 containing Mg-Al-Zn-Si-based intermetallic compound phases 6, at the time of high temperature heating at hot-stamp forming, the Mg-Al-Zn-Si-based intermetallic compound phases 6 melt and it becomes possible to introduce the melted Mg in the Al-containing oxides present at the surface. As a result, it may be that it becomes possible to suitably modify the oxide film formed on the surface of the formed body at the time of hot-stamp forming by the Mg, therefore the chemical convertibility of the obtained hot-stamp formed body can be improved and in turn the corrosion resistance can be remarkably improved.

Therefore, according to the plated steel sheet according to an embodiment of the present invention, even when used for hot-stamp forming, due to the combination of the effect of improvement of the chemical convertibility due to modification of the oxide layer by Mg, the effect of improvement of the corrosion resistance due to suppression of formation of the previously explained Fe-Al-Si phase, and the effect of improvement of the corrosion resistance obtained by making Zn dissolve in the Fe₂ Al₅ phase, it becomes possible to remarkably improve the corrosion resistance of the hot-stamp formed body. In particular, the fact that by suitably controlling the chemical composition of the Fe-Al phase in the plating layer, it is possible to suppress the formation of an Fe-Al-Si phase and promote the dissolution of Zn in the Fe₂ Al₅ phase and that further by making the main layer include Mg-Al-Zn-Si-based intermetallic compound phases, it is possible to remarkably improve the corrosion resistance of the hot-stamp formed body was first made clear by the inventors this time. Therefore, the plated steel sheet according to an embodiment of the present invention is particularly useful in the automobile field where hot-stamp forming is relatively often applied.

Below, a plated steel sheet according to an embodiment of the present invention will be explained in more detail. In the following explanation, the units "%" of contents of the elements, unless particularly indicated otherwise, mean "mass%". Further, in this Description, the "to" showing a numerical range, unless particularly indicated otherwise, is used in the sense including the numerical values described before and after it as a lower limit value and an upper limit value.

### [Plating Layer]

According to an embodiment of the present invention, the plating layer is formed on the surface of the base steel sheet. For example, it is formed on at least one surface of the base steel sheet, preferably on both surfaces. The plating layer has the following chemical composition.

### [Zn: 5.0 to 40.0%]

Zn has a sacrificial corrosion preventive action and is an element effective for improving the corrosion resistance of the plating layer. Further, Zn has the action of reacting with the treatment solution at the time of chemical conversion and forming a chemical conversion coating on the surface. To sufficiently obtain these effects, the Zn content is 5.0% or more. The Zn content may also be 8.0% or more, 10.0% or more, 12.0% or more, 15.0% or more, 18.0% or more, 20.0% or more, or 22.0% or more. On the other hand, if excessively containing Zn, the melting of Zn at the time of high temperature heating of the hot-stamp forming becomes remarkable and sometimes the melted Zn penetrates the steel and triggers liquid metal embrittlement (LME) cracking. Therefore, the Zn content is 40.0% or less. The Zn content may also be 38.0% or less, 35.0% or less, 32.0% or less, 30.0% or less, or 28.0% or less.

### [Si: 0.1 to 15.0%]

Si is an element effective for improving the adhesion of the plating layer. To sufficiently obtain such an effect, the Si content is 0.1% or more. The Si content may also be 0.3% or more, 0.5% or more, 0.8% or more, 1.0% or more, 3.0% or more, or 5.0% or more. On the other hand, if excessively containing Si, sometimes an Fe-Al-Si phase is remarkably formed at the plating layer after hot-stamp forming and the corrosion resistance falls. Therefore, the Si content is 15.0% or less. The Si content may also be 12.0% or less, 10.0% or less, 8.0% or less, or 6.0% or less.

### [Fe: 0.5 to 25.0%]

Fe is, for example, an element able to be included in the plating layer by dissolving from the base steel sheet into the plating bath or reacting with the Al at the time of plating to form an Fe-Al phase at the interface of the base steel sheet and the plating layer. Therefore, the Fe content is 0.5% or more. For example, it may also be 1.0% or more, 3.0% or more, 5.0% or more, 8.0% or more, 10.0% or more, or 12.0% or more. On the other hand, Fe is sometimes contained up to 25.0% or so in the plating layer, but if this range, there is no disadvantageous effect in the plated steel sheet according to an embodiment of the present invention. Therefore, the Fe content is 25.0% or less. For example, it may also be 22.0% or less, 20.0% or less, 18.0% or less, 15.0% or less, or 12.0% or less.

### [Mg: 0.005 to 3.000%]

Mg is an element effective for improving the corrosion resistance of the plating layer, in particular the chemical convertibility. To sufficiently obtain such an effect, the Mg content is 0.005% or more. The Mg content may also be 0.010% or more, 0.030% or more, or 0.050% or more, 0.080% or more, 0.100% or more, or 0.300% or more. On the other hand, from the viewpoint of improvement of the workability, the Mg content may be 3.000% or less. The Mg content may also be 2.500% or less, 2.000% or less, 1.500% or less, 1.000% or less, 0.800% or less, 0.600% or less, or 0.400% or less.

Furthermore, the plating layer may optionally contain at least one of Ni: 0 to 0.500%, Ca: 0 to 3.000%, Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500%, and W: 0 to 0.500%. The total content of these optional elements (i.e., the total of the contents of these elements) is 5.000% or less. The total content of the optional elements may also be 4.500% or less, 4.000% or less, 3.500% or less, 3.000% or less, 2.500% or less, 2.000% or less, 1.500% or less, 1.000% or less, 0.800% or less, 0.500% or less, 0.100% or less, or 0.050% or less. Inclusion of these elements is not essential. The total of the contents of these elements may also be 0%. In accordance with need, the lower limit of the total of the contents of these elements may also be 0.001%, 0.010%, 0.050%, or 0.080%. Below, these optional elements will be explained in detail.

### [Ni: 0 to 0.500%]

Ni is an element effective for improving the corrosion resistance of the plating layer. The Ni content may also be 0%, but to obtain such an effect, the Ni content is preferably 0.001% or more. The Ni content may also be 0.003% or more, 0.005% or more, 0.008% or more, 0.010% or more, or 0.020% or more. The upper limit is not particularly prescribed, but from the viewpoint of production costs, the Ni content is 0.500% or less. For example, it may be 0.400% or less, 0.300% or less, 0.100% or less, 0.050% or less, or 0.030% or less.

### [Ca: 0 to 3.000%]

Ca is an element effective for securing the wettability of the plating bath. The Ca content may also be 0%, but to obtain such an effect, the Ca content is preferably 0.001% or more. The Ca content may also be 0.003% or more, 0.005% or more, or 0.010% or more. On the other hand, if excessively containing Ca, sometimes hard intermetallic compounds are formed in a large amount in the plating layer, the plating layer becomes brittle, and the adhesion with the steel sheet is made to fall. Therefore, the Ca content is preferably 3.000% or less. The Ca content may be 2.000% or less, 1.000% or less, 0.500% or less, 0.300% or less, 0.100% or less, 0.050% or less, or 0.020% or less.

### [Sb: 0 to 0.500%, Pb: 0 to 0.500%, Cu: 0 to 1.000%, Sn: 0 to 1.000%, Ti: 0 to 1.000%, Cr: 0 to 1.000%, Nb: 0 to 1.000%, Zr: 0 to 1.000%, Mn: 0 to 1.000%, Mo: 0 to 1.000%, Ag: 0 to 1.000%, Li: 0 to 1.000%, La: 0 to 0.500%, Ce: 0 to 0.500%, B: 0 to 0.500%, Y: 0 to 0.500%, Sr: 0 to 0.500%, In: 0 to 0.500%, Co: 0 to 0.500%, Bi: 0 to 0.500%, P: 0 to 0.500% and W: 0 to 0.500%]

Sb, Pb, Cu, Sn, Ti, Cr, Nb, Zr, Mn, Mo, Ag, Li, La, Ce, B, Y, Sr, In, Co, Bi, P, and W need not be contained in the plating layer, but can be present in the plating layer in an amount of 0.0001% or more, 0.001% or more, or 0.01% or more. These elements do not have any detrimental effect on the performance of the plated steel sheet if within predetermined ranges of content. However, if the content of any element is excessive, sometimes the corrosion resistance is made to fall. Therefore, the contents of Sb, Pb, La, Ce, B, Y, Sr, In, Co, Bi, P, and W are preferably 0.500% or less. For example, they may be 0.300% or less, 0.100% or less, 0.050% or less, or 0.020% or less. Similarly, the contents of Cu, Sn, Ti, Cr, Nb, Zr, Mn, Mo, Ag, and Li are preferably 1.000% or less. For example, they may be 0.800% or less, 0.500% or less, 0.100% or less, 0.050% or less, or 0.020% or less.

In the plating layer, the balance besides the above elements is comprised of Al and impurities. The "impurities in the plating layer" are constituents, etc., entering due to various factors in the production process such as the raw materials when producing the plating layer. Note that there is no need to particularly prescribe the Al content, but it may be 12.0 to 94.395%. If necessary, the Al content may also be 20.0% or more, 30.0% or more, 40.0% or more, 50.0% or more, 60.0% or more, or 65.0% or more and may also be 94.0% or less, 92.0% or less, 90.0% or less, 85.0% or less, 80.0% or less, 75.0% or less, or 71.0% or less.

### [Measurement of Chemical Composition of Plating Layer]

The chemical composition of the plating layer is determined in the following way: First, an acid solution containing an inhibitor for suppressing corrosion of the base steel sheet (for example, ibit 710K made by Asahi Chemical Industry Co., Ltd.) is used to peel off and dissolve the plating layer from the plated steel sheet, then the obtained acid solution is measured by ICP (high frequency inductive coupling plasma) atomic emission spectrometry to thereby determine the chemical composition of the plating layer (average composition). The type of acid is not particularly limited and may be any acid able to dissolve the plating layer. For example, as the acid containing the inhibitor, a 10% hydrochloric acid aqueous solution with a concentration of ibit 710K of 0.04% can be used.

### [Fe-Al Phase]

### [Si: 3.0 to 15.0% and Zn: 2.0 to 15.0%]

In an embodiment of the present invention, the plating layer contains an Fe-Al phase positioned at the interface with the base steel sheet. The Fe-Al phase contains, by mass%, Si: 3.0 to 15.0% and Zn: 2.0 to 15.0%. As stated earlier, it may be that by making the Fe-Al phase contain Si in 3.0 to 15.0%, much of the Si present in the plating layer can be trapped in the Fe-Al phase. The Fe-Al-Si phase able to be formed after hot-stamp forming is an intermetallic compound containing a relatively large amount of Si, in particular an intermetallic compound containing Si in 5 mass% or more, therefore it may be that by trapping much of the Si in the Fe-Al phase of the interfacial alloy layer before hot-stamp forming, it becomes possible to suppress the formation of an Fe-Al-Si phase at the time of high temperature heating in hot-stamp forming. If the Fe-Al-Si phase is formed in a large amount, similarly galvanic corrosion can occur with the Fe₂ Al₅ phase formed by alloying at the time of high temperature heating in hot-stamp forming. For this reason, suppressing the formation of the Fe-Al-Si phase is extremely effective for improving the corrosion resistance of the plating layer after hot-stamp forming. On the other hand, by making the Fe-Al phase contain Zn in 2.0 to 15.0%, it is possible to make Zn having a sacrificial corrosion preventive action dissolve in the Fe₂ Al₅ phase after hot-stamp forming. By combination with the effect of improvement of the corrosion resistance due to suppression of formation of the Fe-Al-Si phase, the corrosion resistance of the hot-stamp formed body can be remarkably improved.

To further raise the effect of suppression of formation of the Fe-Al-Si phase, the Si content in the Fe-Al phase is preferably 5.0% or more. For example, it may be 6.0% or more, 8.0% or more, or 10.0% or more. On the other hand, even if including much more Si in the Fe-Al phase, the above effect becomes saturated. Therefore, the Si content in the Fe-Al phase is 15.0% or less. For example, it may also be 14.0% or less or 12.0% or less. Similarly, to further raise the effect of improvement of the corrosion resistance due to dissolution of the Zn in the Fe₂ Al₅ phase, the Zn content in the Fe-Al phase is preferably 3.0% or more. For example, it may also be 5.0% or more, 6.0% or more, 8.0% or more, or 10.0% or more. On the other hand, even if including much more Zn in the Fe-Al phase, the above effect becomes saturated. Therefore, the Zn content in the Fe-Al phase is 15.0% or less. For example, it may also be 14.0% or less or 12.0% or less.

### [Main Layer]

### [Area Ratio of Mg-Al-Zn-Si-Based Intermetallic Compound Phases: 0.010% or More]

In an embodiment of the present invention, the plating layer includes a main layer positioned on the Fe-Al phase. In addition, in the cross-section of that main layer, Mg-Al-Zn-Si-based intermetallic compound phases with an Al content of 10 mass% or more are controlled to be present in the main layer in an amount of 0.010% or more by area ratio. The Mg-Al-Zn-Si-based intermetallic compound phases with an Al content of 10 mass% or more have relatively low melting points and the property of being easily oxidized. For this reason, by including the Mg-Al-Zn-Si-based intermetallic compound phases in the main layer in 0.010% or more, at the time of high temperature heating at hot-stamp forming, it is possible to make the Mg-Al-Zn-Si-based intermetallic compound phases melt and suitably modify the oxide film formed on the surface of the formed body at the time of hot-stamp forming. As a result, it becomes possible to improve the chemical convertibility of the obtained hot-stamp formed body and in turn remarkably improve the corrosion resistance. From the viewpoint of further improving the chemical convertibility, the higher the area ratio of the Mg-Al-Zn-Si-based intermetallic compound phases, the more preferable. For example, it may be 0.020% or more, 0.030% or more, 0.050% or more, 0.080% or more, 0.100% or more, or 0.150% or more. The upper limit is not particularly limited, but for example the area ratio of the Mg-Al-Zn-Si-based intermetallic compound phases may also be 1.000% or less, 0.800% or less, 0.600% or less, or 0.500% or less.

The present invention, as explained above, has as its object to provide a plated steel sheet able to exhibit improved corrosion resistance even if used for hot-stamp forming and achieves this object by suitably setting the chemical composition and amount of deposition in a plating layer comprised of an Al-Zn-Mg-Si-based plating, making the Fe-Al phase formed at the interface with a base steel sheet contain, by mass%, Si: 3.0 to 15.0% and Zn: 2.0 to 15.0%, and further making a main layer positioned on the Fe-Al phase contain Mg-Al-Zn-Si-based intermetallic compound phases with an Al content of 10 mass% or more in an area ratio of 0.010% or more. Therefore, for example, the structures contained in the main layer of the plating layer are not particularly limited other than being structures other than Fe-Al phases and the Mg-Al-Zn-Si-based intermetallic compound phases being included in a predetermined amount. It is clear that they are not technical features essential for achieving the object of the present invention.

While not particularly limited, the main layer may also contain at least one of an α-Al phase, η-Zn phase, and Si phase. For example, the main layer may also contain an α-Al phase. The area ratio of the α-Al phase in the main layer is not particularly limited, but, for example, may be 30% or more, 40% or more, 50% or more, or 60% or more. Similarly, the area ratio of the α-Al phase in the main layer may be 100% and, for example, may also be 90% or less, 80% or less, or 70% or less. Note that the region other than the Fe-Al phase in the plating layer, i.e., the non Fe-Al phase, is the main layer, therefore the plating layer is comprised of the Fe-Al phase and the main layer.

### [Analysis of Plating Layer]

The plating layer is analyzed in the following way. First, to enable a cross-section of the plating layer to be examined, five samples are taken from the plated steel sheet. Next, for each sample, a rectangular range of 80 µm in the thickness direction and 100 µm in the direction perpendicular to the thickness direction is defined as one field. A total of five fields for the five samples are photographed using an SEM-EDS or EPMA at a power of 1500X to obtain mapping images. From the elemental distribution maps of the mapping images, the position of the Fe-Al phase is determined. More specifically, elemental distribution maps are obtained by SEM-EDS or EPMA for the measured elements of Fe, Al, Si, and Zn. In the elemental distribution maps, a region satisfying Fe: 25 to 65 mass% and Al: 30 to 70 mass% is identified as an Fe-Al phase. For the region of the Fe-Al phase, the concentrations of the elements in the elemental distribution maps are shown by colors of color bars. The ranges of concentration of the color bars are set to Fe: 25 to 65 mass% and Al: 30 to 70 mass%, and the elemental distribution maps of Fe and Al adjusted in color bars are superposed to identify the Fe-Al phase (notation 4 in FIG. 1). In these elemental distribution maps, a region with an Fe of more than 65 mass% is identified as the base steel sheet (notation 2 in FIG. 1) and a region other than the Fe-Al phase in the plating layer is identified as the main layer (notation 5 in FIG. 1).

The Si content and Zn content in the Fe-Al phase are determined in the following way. First, in each of the above five samples, the above method is used to identify the Fe-Al phase, then an SEM-EDS or EPMA is used to measure the concentrations of elements forming the Fe-Al phase (specifically, the Si content and Zn content). More specifically, in each of the samples, at the thickness position of the center of thickness of the Fe-Al phase, the Si content and Zn content at five measurement points are measured at 50 µm intervals in a direction parallel to the surface of the plated steel sheet. The average of these is made the measurement value of each sample. The measurement values of five samples of the concentration of an element covered are found and the average value of the measurement values are made the content of the element (Si content or Zn content).

Further, in the Mg-Al-Zn-Si-based intermetallic compound phases in the main layer, from the elemental distribution maps of the mapping images obtained at the above five samples, regions with an Al content of 10 mass% or more, an Mg content of 1.0 mass% or more, a Zn content of 1.0 mass% or more, and an Si content of 1.0 mass% or more (however, only parts other than regions identified as Fe-Al phase by the above method) are identified and determined as Mg-Al-Zn-Si-based intermetallic compound phases. In each of the samples, the area ratio of the Mg-Al-Zn-Si-based intermetallic compound phases with respect to the main layer is calculated and these averages to determine the area ratio of the Mg-Al-Zn-Si-based intermetallic compound phases. The typical chemical composition of the Mg-Al-Zn-Si-based intermetallic compound phases includes, by mass%, Mg: 2 to 30%, Al: 10 to 75 mass%, Zn: 2 to 50%, and Si: 2 to 40%. Structures in the main layer other than the Mg-Al-Zn-Si-based intermetallic compound phases are identified from the elemental distribution mapping of mapping images obtained at one of the above samples. If calculating the area ratios of the structures in the main layer, the area ratios of the α-Al phase, η-Zn phase, Si phase, and other structures are measured from the elemental distribution maps of the mapping images obtained at the above five samples and the average of the five fields is calculated for determination. Here in the elemental distribution maps by SEM-EDS or EPMA, the α-Al phase is defined as a region satisfying Fe: 0 to 10 mass%, Al: 20 to 90 mass%, and Zn: 0 to 80%, while the η-Zn phase is defined as a region satisfying Fe: 0 to 10 mass%, Al: 0 to less than 20 mass%, and Zn: more than 80 mass%. On the other hand, the Si phase is defined as a region satisfying Si: 80 mass% or more.

As the plating layer having the above chemical composition and Fe-Al phase and main layer, a hot dip coating layer is possible. There is no need to exclude plating layers other than a hot dip coating layer, but the invention is not limited to a hot dip coating layer.

### [Amount of Deposition of Plating Layer: 20 g/m² or More Per Side]

In an embodiment of the present invention, the amount of deposition of the plating layer is 20 g/m² or more per side. In general, at the time of high temperature heating in hot-stamp forming, the plating layer sometimes become alloyed with the base steel sheet resulting in a drop of the corrosion resistance. However, according to an embodiment of the present invention, by making the amount of deposition of the plating layer relatively greater, specifically by controlling it to 20 g/m² or more per side, it is possible to sufficiently secure the amount of Zn of the overall plating layer formed after hot-stamp forming and the amount of dissolved Zn in the Fe₂ Al₅ phase. It is believed that excellent corrosion resistance can be achieved due to the presence of such a plating layer. On the other hand, if the amount of deposition of the plating layer is small, the effect of improvement of the corrosion resistance due to the presence of Zn cannot be sufficiently obtained and sometimes the corrosion resistance after hot-stamp forming falls. From the viewpoint of improvement of the corrosion resistance, the amount of deposition of the plating layer is, per side, preferably 30 g/m² or more, 40 g/m² or more, or 50 g/m² or more, more preferably 60 g/m² or more, still more preferably 70 g/m² or more, most preferably 80 g/m² or more. The upper limit is not particularly prescribed, but the amount of deposition of the plating layer may also be, for example, 200 g/m² or less, 190 g/m² or less, 180 g/m² or less, or 170 g/m² or less

### [Measurement of Plating Deposition Amount]

The amount of deposition of the plating layer is determined in the following way. First, a sample of 30 mm×30 mm is taken from the plated steel sheet, then an acid solution containing an inhibitor for inhibiting corrosion of the base steel sheet (for example, ibit 710K made by Asahi Chemical Industry Co., Ltd.) is used to peel off and dissolve the plating layer from this sample. The amount of deposition of the plating layer is determined from the change in mass of the sample before and after peeling it off and dissolving it. The type of acid is not particularly limited and may be any acid able to dissolve the plating layer. For example, as the acid containing the inhibitor, it is possible to use an aqueous solution with a concentration of ibit 710K of 0.04% and a concentration of hydrochloric acid of 10%.

### [Depth With C Concentration of 0.10 Mass% or Less in Depth Direction of Base Steel Sheet: 0.5 µm or More]

According to an embodiment of the present invention, the depth where the C concentration is 0.10 mass% or less in the depth direction of the base steel sheet from the interface of the base steel sheet and the plating layer is preferably 0.5 µm or more. By making the C concentration at the surface layer part of the base steel sheet change, it is possible to make the alloying behavior of the plating layer and the base steel sheet at the time of high temperature heating in the hot-stamp forming change. This time, while the reason is not necessarily clear, the inventors discovered that by providing a region with a relative low C concentration at the surface layer part of the base steel sheet, more specifically by making the depth where the C concentration is 0.10 mass% or less 0.5 µm or more, it is possible to further suppress the formation of the Fe-Al-Si phase and thereby possible to further improve the corrosion resistance after hot-stamp forming. From the viewpoint of improvement of the corrosion resistance, the greater the depth where the C concentration is 0.10 mass% or less, the more preferable. For example, it may also be 0.8 µm or more, 1.0 µm or more, 1.2 µm or more, 1.5 µm or more, or 2.0 µm or more. The upper limit is not particularly prescribed, but, for example, the depth where the C concentration is 0.10 mass% or less may also be 15.0 µm or less, 10.0 µm or less, or 5.0 µm or less.

### [Measurement of Depth With C Concentration of 0.10 Mass% or Less in Depth Direction of Base Steel Sheet]

The depth where the C concentration is 0.10 mass% or less in the depth direction of the base steel sheet from the interface of the base steel sheet and the plating layer is determined in the following way using a high frequency glow discharge spectrometer (GDS). Specifically, the method is used of rendering the surface of the plated steel sheet an Ar atmosphere, applying voltage to cause the generation of glow plasma, and in that state sputtering the surface of the plated steel sheet while analyzing the concentration in the depth direction. Further, the elements contained in the material are identified from the emission spectrum wavelengths distinctive to the elements emitted by excitation of atoms in the glow plasma and the emission intensities of the identified elements are estimated. Data of the depth direction can be estimated from the sputter time. Specifically, it is possible to use standard samples in advance to find the relationship between the sputter time and sputter depth and convert the sputter time to the sputter depth. Therefore, the sputter depth converted from the sputter time can be defined as the depth from the surface of the material. The obtained emission intensity is converted to mass% by preparation of a calibration curve. If measuring a plated steel sheet by GDS in this way, the position where the Al concentration becomes 1.0 mass% or less in the depth direction is determined as the interface of the base steel sheet and the plating layer and the distance up to the point where the C concentration becomes 0.10 mass% or more in the depth direction from the interface is determined as the "depth where the C concentration is 0.10 mass% or less in the depth direction of the base steel sheet from the interface of the base steel sheet and the plating layer".

### [Preferable Chemical Composition of Base Steel Sheet]

The present invention, as explained above, has as its object the provision of a plated steel sheet able to exhibit improved corrosion resistance even when used for hot-stamp forming and achieves this object by suitably setting the chemical composition and amount of deposition in a plating layer comprised of an Al-Zn-Si-based plating, making the Fe-Al phase formed at the interface of the base steel sheet contain, by mass%, Si: 3.0 to 15.0% and Zn: 2.0 to 15.0%, and further making main layer positioned on the Fe-Al phase contain an Mg-Al-Zn-Si-based intermetallic compound phase with an Al content of 10 mass% or more in 0.010% or more. Therefore, the chemical composition itself of the base steel sheet clearly is not an essential technical feature for achieving the object of the present invention. Below, a preferable chemical composition of the base steel sheet used in the plated steel sheet according to an embodiment of the present invention will be explained in detail, but the explanation is intended as mere illustration of the preferable chemical composition of the base steel sheet for use for hot-stamp forming and is not intended to limit the present invention to one using a base steel sheet having such a specific chemical composition.

In an embodiment of the present invention, for example, the base steel sheet preferably has a chemical composition comprising, by mass%,
C: 0.13 to 0.50%,
Si: 0.001 to 3.000%,
Mn: 0.30 to 3.00%,
Al: 0.0002 to 2.000%,
P: 0.100% or less,
S: 0.1000% or less,
N: 0.0100% or less,
Nb: 0 to 0.15%,
Ti: 0 to 0.15%,
V: 0 to 0.15%,
Mo: 0 to 1.0%,
Cr: 0 to 1.0%,
Cu: 0 to 1.0%,
Ni: 0 to 1.0%,
B: 0 to 0.0100%,
W: 0 to 1.000%,
Hf: 0 to 0.050%,
Mg: 0 to 0.050%,
Zr: 0 to 0.050%,
Ca: 0 to 0.010%,
REM: 0 to 0.30%,
Ir: 0 to 1.000%, and
balance: Fe and impurities.
Below, the elements will be explained in more detail.

### [C: 0.13 to 0.50%]

C is an element inexpensively making the tensile strength increase and an element important for controlling the strength of the steel. To sufficiently obtain such an effect, the C content is preferably 0.13% or more. The C content may also be 0.15% or more, 0.20% or more, 0.30% or more, or 0.35% or more. On the other hand, if excessively containing C, sometimes a drop in the elongation is invited. For this reason, the C content is preferably 0.50% or less. The C content may also be 0.45% or less or 0.40% or less.

### [Si: 0.001 to 3.000%]

Si is an element acting as a deoxidizing agent and suppressing the precipitation of carbides in the cooling process in annealing of the cold rolled steel sheet. To sufficiently obtain such an effect, the Si content is preferably 0.001% or more. The Si content may also be 0.010% or more, 0.100% or more, or 0.200% or more. On the other hand, if excessively containing Si, sometimes an increase in the steel strength and a drop in the elongation are invited. For this reason, the Si content is preferably 3.000% or less. The Si content may also be 2.500% or less, 2.000% or less, 1.500% or less, or 1.000% or less.

### [Mn: 0.30 to 3.00%]

Mn is an element raising the hardenability of the steel and an element effective for raising the strength. To sufficiently obtain such an effect, the Mn content is preferably 0.30% or more. The Mn content may also be 0.50% or more, 1.00% or more, or 1.30% or more. On the other hand, if excessively containing Mn, sometimes an increase in the steel strength and a drop in the elongation are invited. For this reason, the Mn content is preferably 3.00% or less. The Mn content may also be 2.80% or less, 2.50% or less, or 2.00% or less.

### [Al: 0.0002 to 2.000%]

Al acts as a deoxidizing agent of the steel and is an element having the action of making the steel sounder. To sufficiently obtain such an effect, the Al content is preferably 0.0002% or more. The Al content may also be 0.001% or more, 0.010% or more, 0.050% or more, or 0.100% or more. On the other hand, if excessively containing Al, sometimes coarse Al oxides are formed and the elongation of the steel sheet falls. For this reason, the Al content is preferably 2.000% or less. The Al content may also be 1.500% or less, 1.000% or less, 0.800% or less, or 0.500% or less.

### [P: 0.100% or Less]

P is an element segregating at the grain boundaries and promoting embrittlement of the steel. The smaller the P content, the more preferable, therefore ideally it is 0%. However, excessive reduction of the P content sometimes invites a great increase in the cost. For this reason, the P content may be 0.0001% or more and may also be 0.001% or more or 0.005% or more. On the other hand, if excessively including P, as explained above, due to grain boundary segregation, sometimes embrittlement of the steel is invited. Therefore, the P content is preferably 0.100% or less. The P content may also be 0.050% or less, 0.030% or less, or 0.010% or less.

### [S: 0.1000% or Less]

S is an element forming MnS and other nonmetallic inclusions in the steel and inviting a drop in ductility of the steel material part. The smaller the S content, the more preferable, therefore ideally it is 0%. However, excessive reduction of the S content sometimes invites a large increase in costs. Therefore, the S content may be 0.0001% or more and may also be 0.0002% or more, 0.0010% or more, or 0.0050% or more. On the other hand, if excessively containing S, at the time of cold forming, sometimes occurrence of cracking starting from the nonmetallic inclusions is invited. Therefore, the S content is preferably made 0.1000% or less. The S content may also be 0.0500% or less, 0.0200% or less, or 0.0100% or less.

### [N: 0.0100% or Less]

N is an element forming coarse nitrides in the steel sheet and causing a drop in workability of the steel sheet. The smaller the N content, the more preferable, therefore ideally it is 0%. However, excessive reduction of the N content sometimes invites a large increase in production costs. For this reason, the N content may be 0.0001% or more and may also be 0.0005% or more or 0.0010% or more. On the other hand, if excessively containing N, as explained above, sometimes coarse nitrides are formed and a drop in the workability of the steel sheet is caused. Therefore, the N content is preferably 0.0100% or less. The N content may also be 0.0080% or less or 0.0050% or less.

The preferable basic chemical composition of the base steel sheet is as explained above. Furthermore, the base steel sheet may, in accordance with need, contain, in place of part of the balance of Fe, one or more elements selected from the group comprising Nb: 0 to 0.15%, Ti: 0 to 0.15%, V: 0 to 0.15%, Mo: 0 to 1.0%, Cr: 0 to 1.0%, Cu: 0 to 1.0%, Ni: 0 to 1.0%, B: 0 to 0.0100%, W: 0 to 1.000%, Hf: 0 to 0.050%, Mg: 0 to 0.050%, Zr: 0 to 0.050%, Ca: 0 to 0.010%, REM: 0 to 0.30%, and Ir: 0 to 1.000%. These elements may be respectively contained in 0.0001% or more, 0.0005% or more, 0.001% or more, or 0.01% or more.

In the base steel sheet, the balance besides the above elements is comprised of Fe and impurities. The "impurities" in the base steel sheet are constituents entering due to various factors in the production process, such as the ore, scrap, or other such raw materials, when industrially producing the base steel sheet.

The chemical composition of the base steel sheet may be measured by a general method of analysis. For example, the chemical composition of the base steel sheet may be measured by first mechanically grinding it to remove the plating layer, then applying ICP-AES (inductively coupled plasma-atomic emission spectrometry) to the cuttings based on JIS G 1201: 2014. Specifically, for example, it can be identified by taking a 35 mm square test piece from near the sheet thickness 1/2 position of the base steel sheet and measuring it by a ICPS-8100 made by Shimadzu, etc. (measurement device) under conditions based on calibration curves prepared in advance. Of the elements which cannot be measured by ICP-AES, C and S can be measured using the combustion-infrared absorption method, N using the inert gas melting-thermal conductivity method, and O using the inert gas melting-nondispersive infrared absorption method.

### [Thickness of Base Steel Sheet]

The thickness of the base steel sheet is not particularly limited, but, for example, is 0.2 mm or more and may also be 0.3 mm or more, 0.6 mm or more, 1.0 mm or more, or 2.0 mm or more. Similarly, the thickness of the base steel sheet is, for example, 6.0 mm or less and may also be 5.0 mm or less or 4.0 mm or less.

### <Method of Production of Plated Steel Sheet>

Next, a preferable method of production of a plated steel sheet according to an embodiment of the present invention will be explained. The following explanation is intended to illustrate the characteristic method for producing a plated steel sheet according to an embodiment of the present invention and is not intended to limit the plated steel sheet to one produced by the method of production explained below.

A plated steel sheet according to an embodiment of the present invention can, for example, be produced by performing a casting step of casting molten steel adjusted in chemical composition to form a slab, a hot rolling step of hot rolling the slab to obtain a hot rolled steel sheet, a coiling step of coiling the hot rolled steel sheet, a cold rolling step of cold rolling the coiled hot rolled steel sheet to obtain a cold rolled steel sheet, an annealing step of annealing the cold rolled steel sheet, a cooling step of cooling the annealed cold rolled steel sheet, and a plating step of forming a plating layer on the obtained base steel sheet. Alternatively, it is also possible to perform the cold rolling step as pickled without coiling after the hot rolling step. Below, each step will be explained in detail.

### [Casting Step]

The conditions of the casting step are not particularly limited. For example, the casting may be performed by the method of smelting by a blast furnace, electric arc furnace, etc., then performing various types of secondary refining, then casting by usual continuous casting, ingot making, etc.

### [Hot Rolling Step]

The cast slab can be hot rolled to obtain a hot rolled steel sheet. The hot rolling step is performed by hot rolling the cast slab directly or after cooling once, then reheating. When performing the reheating, the heating temperature of the slab may, for example, be 1100 to 1250°C. In the hot rolling step, usually rough rolling and finish rolling are performed. The temperatures and rolling reductions of the rolling operations can be suitably determined in accordance with the desired microstructure or sheet thickness. For example, the end temperature of the finish rolling may be 900 to 1050°C and the rolling reduction of the finish rolling may be 10 to 50%.

### [Coiling Step]

The hot rolled steel sheet can be coiled at a predetermined temperature. The coiling temperature can be suitably determined in accordance with the desired microstructure, etc. For example, it may be 500 to 800°C. Before coiling or after coiling, then uncoiling, the hot rolled steel sheet may also be given predetermined heat treatment. Alternatively, the coiling step need not be performed. The sheet can be pickled after the hot rolling step, then subjected to the later explained cold rolling step.

### [Cold Rolling Step]

After the hot rolled steel sheet is pickled, etc., the hot rolled steel sheet can be cold rolled to obtain a cold rolled steel sheet. The rolling reduction of the cold rolling can be suitably determined in accordance with the desired microstructure or sheet thickness. For example, it may be 20 to 80%. After the cold rolling, for example, the sheet may be air cooled to cool it down to room temperature.

### [Annealing Step]

Next, the obtained cold rolled steel sheet is annealed. The annealing step includes heating the cold rolled steel sheet in an atmosphere of a dew point of -50 to 20°C to a temperature of 730 to 900°C and holding it there for 10 to 300 seconds. In particular, by performing the annealing step under conditions of a relatively high dew point of -10 to 20°C, it is possible to suitably decarburize the surface layer part of the cold rolled steel sheet. In this case, in the finally obtained plated steel sheet, it becomes possible to control the depth where the C concentration is 0.10 mass% or less to within a range of 0.5 µm or more in the depth direction of the base steel sheet from the interface of the base steel sheet and the plating layer. As a result, compared with the case of performing the annealing step under conditions of a dew point of less than-10°C, it becomes possible to further improve the corrosion resistance after hot-stamp forming. The atmosphere in the annealing step may be a reducing atmosphere, more specifically a reducing atmosphere containing nitrogen and hydrogen, for example, a reducing atmosphere containing 1 to 10% of hydrogen (for example, hydrogen 4% and a balance of nitrogen).

### [Cooling Step]

The cooling step may be performed by a cooling speed suitable for obtaining the desired microstructure from the heating temperature of the annealing step to the dipping temperature of the next plating step. While not particularly limited, for example, the cooling step may be performed by an average cooling step of 10°C/s or more from the heating temperature of the annealing step to the plating step down to the dipping temperature.

### [Plating Step]

Next, in the plating step, at least one surface, preferably both, of the cold rolled steel sheet (base steel sheet) is formed with a plating layer having the chemical composition and form explained above. More specifically, the plating step is performed using a plating bath adjusted in constituents so that the chemical composition of the plating layer becomes within the range explained above, for example, a plating bath containing Zn: 5.0 to 50.0%, Si: 0.1 to 18.0%, Mg: 0.010 to 3,000%, and a balance of Al and impurities (plating bath temperature: 650°C or more, for example, 650 to 680°C) so that the dipping temperature of the base steel sheet in the plating bath becomes 500°C or less, then after plating, the sheet is cooled down to 480°C by an average cooling speed of 20°C/s or more, then is cooled from 480°C down to 300°C by an average cooling speed of 10°C/s or less. The plating step is important for obtaining the desired chemical composition of the Fe-Al phase formed at the interface with the base steel sheet. Furthermore, it is important that the main layer be formed with Mn-Al-Zn-Si-based intermetallic compound phases in a predetermined amount. This will be explained in detail below:

In general, the plating step is performed so that the dipping temperature becomes the same or the same extent as the plating bath temperature. However, if the difference between the dipping temperature of the base steel sheet in the plating bath and the plating bath temperature (i.e., plating bath temperature-dipping temperature) is less than 150°C, if the dipping temperature is higher than 500°C, or the plating bath temperature is lower than 650°C, an Fe-Al phase of a suitable phase type can no longer be formed. Specifically, in these cases, the Si content of the Fe-Al phase becomes less than 3.0% and similarly the Zn content becomes less than 2.0%. As a result, if such a plated steel sheet is subjected to high temperature heating (of the hot-stamp forming), during that high temperature heating, formation of the Fe-Al-Si phase in the Fe₂ Al₅ phase cannot be suppressed and/or the Zn having a sacrificial corrosion preventive action can no longer be made to sufficiently dissolve in the Fe₂ Al₅ phase. For this reason, the corrosion resistance of the plating layer after hot-stamp forming greatly falls. Therefore, in the present method of production, by controlling the plating bath temperature to 650°C or more and the dipping temperature to 500°C or less to reliably make the dipping temperature 150°C or more lower than the plating bath temperature, the Fe-Al phase is made to precipitate at a low temperature and the Fe-Al phase is made to change to a phase type suitable for inclusion of Si: 3.0 to 15.0% and Zn: 2.0 to 15.0%. By trapping much of the Si in the Fe-Al phase in this way, it becomes possible to suppress formation of an Fe-Al-Si phase in the Fe₂ Al₅ phase at the time of high temperature heating in hot-stamp forming. Further, by making the Fe-Al phase include Zn within the above range, it is possible to make Zn with its sacrificial corrosion preventive action dissolve in the Fe₂ Al₅ phase formed by alloying at the time of high temperature heating in hot-stamp forming and thereby improve the corrosion resistance of the plating layer after hot-stamp forming.

In general, the dipping temperature, as stated earlier, is controlled to be the same as or the same extent as the plating bath temperature. Even if the dipping temperature is different from the plating bath temperature, the dipping temperature is generally controlled to within a range of ±20°C with respect the plating bath temperature. As the reason for this, the fact that there is no need to go to the trouble of spending on production to cool and control the dipping temperature to a lower temperature despite the sheet temperature rising to the plating bath temperature at the time of dipping in the plating bath, the fact that sometimes the plating bath solidifies due to the dipping temperature being lower than the plating bath temperature, etc., may be mentioned. Therefore, the fact that, like in the present method of production, it is possible to control the plating bath temperature to 650°C or more and the dipping temperature to 500°C or less so as to reliably make the dipping temperature become 150°C or more lower than the plating bath temperature to thereby improve the corrosion resistance of the plating layer after hot-stamp forming is extremely unexpected and, further, surprising. The lower limit of the dipping temperature is not particularly prescribed, but, for example, the dipping temperature of the base steel sheet in the plating bath may be 380°C or more. Note that, in conventional thinking, it is believed that by controlling the dipping temperature to 500°C or less, there would be a possibility of the plating bath solidifying due to the composition of the plating bath. However, in the present embodiment, it was discovered that by making the difference between the dipping temperature and the plating bath temperature larger than the conventional thinking at 150°C or more, i.e., by making the dipping temperature 500°C or less and making the plating bath temperature a high temperature of 650°C, etc., it is possible to prevent solidification of the plating bath. Note that, to prevent solidification of the plating bath, it is preferable to make the liquid plating circulate by stirring it in the plating bath.

The plating step is, for example, performed by hot dip coating. The other conditions of the plating step may be suitably set considering the thickness and amount of deposition, etc., of the plating layer. For example, by dipping the cold rolled steel sheet in a plating bath, then pulling it up and using gas wiping to immediately blow N₂ gas or air, then cool, it is possible to adjust the amount of deposition of the plating layer to within a predetermined range, for example, to within a range of 20 to 200 g/m² per side.

### [Cooling After Plating]

After plating, the steel sheet, as explained above, is cooled by primary cooling down to 480°C by an average cooling speed of 20°C/s or more, then is cooled from 480°C to 300°C by secondary cooling by an average cooling speed of 10°C/s or less. By cooling the steel sheet after plating based on such a combination of primary cooling by a relatively fast average cooling speed (20°C/s or more) and secondary cooling by a relatively slow average cooling speed (10°C/s or less), it becomes possible to form Mg-Al-Zn-Si-based intermetallic compound phases in the main layer in a predetermined amount. Explained more specifically, if adding Mg to the plating, in general an Mg₂ Si phase easily precipitates. However, by first, in the primary cooling, rapidly cooling the steel sheet after plating down to 480°C by an average cooling speed of 20°C/s or more, it is possible to suppress the precipitation of Mg₂ Si phases while rendering the composition of the liquid phase a composition suitable for precipitation of the Mg-Al-Zn-Si-based intermetallic compound phases, then in the secondary cooling, gradually cooling the steel sheet from 480°C down to 300°C by an average cooling rate of 10°C/s or less, it is possible to make the Mg-Al-Zn-Si-based intermetallic compound phases stably and slowly precipitate and possible to form a plating layer comprised of a main layer containing Mg-Al-Zn-Si-based intermetallic compound phases with an Al content of 10 mass% or more in an area ratio of 0.010% or more. Mg-Al-Zn-Si-based intermetallic compound phases with an Al content of 10 mass% or more are relatively low in melting point and have the property of being easily oxidized. For this reason, by including Mg-Al-Zn-Si-based intermetallic compound phases in the main layer in 0.010% or more, at the time of high temperature heating at hot-stamp forming, it is possible to make the Mg-Al-Zn-Si-based intermetallic compound phases melt and suitably modify the oxide layer formed at the surface of the formed body at the time of hot stamping by the melted Mg. As a result, it becomes possible to improve the chemical convertibility of the obtained hot-stamp formed body.

On the other hand, if continuing to rapidly cool even from 480°C down to 300°C or cooling by an average cooling speed of more than 10°C/s, the composition of the liquid phase becomes a composition suitable for precipitation of α-(Al, Mg, Zn) phases, i.e., Mg dissolves in the α-Al phase and Mg-Al-Zn-Si-based intermetallic compound phases can no longer be made to precipitate in the desired amounts. In this case, only naturally, the oxide film formed at the surface of the formed body at the time of high temperature heating at hot-stamp forming can no longer be modified by Mg and the desired chemical convertibility can no longer be obtained. The upper limit of the average cooling speed of the primary cooling is not particularly prescribed, but for example may be 50°C/s or less. Similarly, the lower limit of the secondary cooling is not particularly prescribed, but for example may be 3°C/s or more.

According to the present method of production, it is possible to produce a plated steel sheet provided with a plating layer controlled in chemical composition of the plating layer as a whole to within a predetermined range and with an amount of deposition of the plating layer of 20 g/m² or more per side, containing in the Fe-Al phase formed at an interface with the base steel sheet, by mass%, Si: 3.0 to 15.0% and Zn: 2.0 to 15.0%, and further containing Fe-Al, and containing in the main layer positioned on the Fe-Al phase Mg-Al-Zn-Si-based intermetallic compound phases with an Al content of 10 mass% or more by an area ratio of 0.010% or more. For this reason, even if exposed to a high temperature such as at the time of hot-stamp forming, due to the combination of the effect of improvement of the corrosion resistance due to the suppression of formation of an Fe-Al-Si phase in the plating layer, the effect of improvement of the corrosion resistance due to the dissolution of Zn in the Fe₂ Al₅ phase, and the effect of improvement of the chemical convertibility due to the modification of the oxide film by Mg, it becomes possible to remarkably improve the corrosion resistance of a hot-stamp formed body. Therefore, according to such a plated steel sheet, when used as plated steel sheet for hot-stamp forming use, it becomes possible to realize excellent corrosion resistance compared with a conventional plated steel sheet. Therefore, it is possible to contribute to the development of industry through the increase in service life in use of plated steel sheet for automobiles and building materials.

Below, examples will be used to explain the present invention in more detail, but the following examples are merely illustrations of the present invention. The present invention is not limited to these examples in any way. The present invention can be freely changed within a scope not deviating from the gist of the present invention needless to say.

### EXAMPLES

In the following examples, plated steel sheets according to embodiments of the present invention were produced under various conditions and the properties of the produced plated steel sheets were investigated.

First, in each case, molten steel was cast by continuous casting to form a slab having a chemical composition comprising, by mass%, C: 0.20%, Si: 0.012%, Mn: 1.30%, Al: 0.030%, P: 0.005%, S: 0.0020% and N: 0.0030% and having a balance of Fe and impurities, cooling the slab once, then reheating it to 1200°C and hot rolling it, then coiling it at a temperature of 600°C or less. The hot rolling was performed by performing rough rolling and finish rolling. The end temperature of the finish rolling was 900 to 1050°C and the rolling reduction of the finish rolling was 30%. Next, the obtained hot rolled steel sheet was pickled, then was cold rolled by a rolling reduction of 50% to obtain a cold rolled steel sheet having a sheet thickness of 1.6 mm. Next, the obtained cold rolled steel sheet was subjected to an annealing step in a mixed gas atmosphere of 4% hydrogen and a balance of nitrogen in a furnace having an oxygen concentration of 20 ppm or less under the conditions shown in Table 1, then was cooled by an average cooling speed of 10°C/s or more to produce a base steel sheet.

Next, the produced base steel sheet was cut to 100 mm×200 mm and a batch type hot dip coating test apparatus made by the company was used to plate the base steel sheet. More specifically, first, the produced base steel sheet was introduced into a plating bath having various chemical compositions and the plating bath temperature shown in Table 1 at the dipping temperature shown in Table 1 for about 3 seconds, then this was pulled up by a pullup speed of 20 to 200 mm/s and adjusted in amount of deposition of the plating layer by N₂ gas wiping to the value shown in Table 1. Next, the base steel sheet with the plating layer deposited on it was cooled using nitrogen gas as a cooling gas down to 480°C by the average cooling speed shown in Table 1 by primary cooling, then was cooled from 480°C to 300°C by the average colling speed shown in Table 1 by secondary cooling to thereby obtain a plated steel sheet formed with the plating layer at both sides of the base steel sheet. The sheet temperature was measured using a thermocouple spot welded to the center part of the base steel sheet.

The properties and characteristics of the plated steel sheets obtained were measured and evaluated by the following methods:

### [Analysis of Chemical Composition of Plating Layer Etc.]

The chemical composition of the plating layer was determined by dipping a sample cut to 30 mm×30 mm in a 10% HCl aqueous solution containing ibit 710K of a concentration of 0.04% as an inhibitor, pickling and peeling off the plating layer, then measuring the plating constituents dissolved in the aqueous solution by ICP atomic emission spectrometry. Further, the masses of the sample before and after peeling by pickling were measured and the amount of deposition of the plating layer was determined from the change of mass. The results are shown in Table 1.

### [Structural Analysis of Plating Layer]

Using the above-mentioned method, the Fe-Al phase, main layer, and Mg-Al-Zn-Si-based intermetallic compound phases were identified. For the Fe-Al phase, similarly the above-mentioned method was used to determine the Si content and the Zn content. Furthermore, using the above-mentioned method, the area ratio of the Mg-Al-Zn-Si-based intermetallic compound phases and the depth with a C concentration of 0.10 mass% or less at the depth direction of the base steel sheet were determined. Note that, in all of the examples, the Fe-Al phase was present at the interface with the base steel sheet in the plating layer while a non-Fe-Al phase, i.e., the main layer, was present on the Fe-Al phase (at the front surface side of the plated steel sheet).

### [Chemical Convertibility]

The chemical convertibility was evaluated in the following way: First, the plated steel sheet was loaded into a 900°C atmospheric heating furnace. After the temperature of the plated steel sheet reached the furnace inside temperature-10°C, it was held there for 100 seconds. Next, the plated steel sheet was taken out from the furnace. The plated steel sheet was sandwiched between plate dies at a temperature of about room temperature and rapidly cooled. After heating and rapid cooling, a 50 mm×100 mm sample of the plated steel sheet was treated by Zn phosphate (SD5350 System: standard of Nippon Paint Industrial Coating) for form a chemical conversion coating. Next, fluorescent X-ray analysis was used to measure the P intensity and a calibration curve was used to convert this to the amount of deposition of the chemical conversion coating. The chemical convertibility of the plated steel sheet was evaluated in accordance with the amount of deposition of the chemical conversion coating by the following evaluation criteria,
AA: amount of deposition of 0.9 g/m² or more
A: amount of deposition of less than 0.1 to 0.9 g/m²
B: amount of deposition of less than 0.1 g/m²

### [Paint Blistering]

Paint blistering was evaluated as follows: First, a 50 mm×100 mm sample of a plated steel sheet heated and rapidly cooled in the same way as the base iron corrosion depth was treated by Zn phosphate (SD5350 System: standard of Nippon Paint Industrial Coating), then was painted by electrodeposition (PN110 Powernics Gray: standard of Nippon Paint Industrial Coating) to 20 µm and was baked at a temperature of 150°C and 20 minutes. Next, a cut was made at the center of the sample reaching the base iron (base steel sheet). Next, a neutral salt spray cycle test prescribed in JIS H 8502: 1999, 8.1 was performed for 120 cycles to measure the paint blister width. The corrosion resistance was evaluated in the following way.
AAA: 2 mm or less
AA: more than 2 to 3 mm
A: more than 3 to 4 mm
B: more than 4 mm

A case where the chemical convertibility is evaluated as AA and A and the paint blistering is evaluated as AAA, AA, and A, even when used for hot-stamp forming, was evaluated as a plated steel sheet able to exhibit improved corrosion resistance. The results are shown in Table 1.

### [Table 1-1]

**Table 1-1**

| No. | Class | Plating layer | | | | | | | | | |
|---|---|---|---|---|---|---|---|---|---|---|---|
| | | Chemical composition (mass%) | | | | | | | | | Amount of deposition (g/m²) |
| | | Al | Zn | Si | Fe | Mg | Other elements | | | | |
| | | | | | | | Element 1 | mass% | Element 2 | mass% | |
| 1 | Ex. | Bal. | 5.0 | 0.1 | 25.0 | 0.005 | | | | | 20 |
| 2 | Ex. | Bal. | 5.0 | 0.1 | 18.0 | 0.005 | | | | | 40 |
| 3 | Ex. | Bal. | 20.0 | 5.0 | 10.0 | 0.050 | Ti | 0.004 | | | 60 |
| 4 | Ex. | Bal. | 30.0 | 10.0 | 3.0 | 0.500 | Y | 0.003 | In | 0.001 | 60 |
| 5 | Ex. | Bal. | 40.0 | 15.0 | 0.5 | 3.000 | Cu | 0.001 | | | 150 |
| 6 | Ex. | Bal. | 10.0 | 0.5 | 3.0 | 0.050 | | | | | 60 |
| 7 | Ex. | Bal. | 10.0 | 3.0 | 3.0 | 0.050 | | | | | 60 |
| 8 | Ex. | Bal. | 10.0 | 3.0 | 3.0 | 0.050 | Mo | 0.001 | Cr | 0.06 | 60 |
| 9 | Ex. | Bal. | 10.0 | 3.0 | 3.0 | 0.050 | Mn | 0.03 | | | 60 |
| 10 | Ex. | Bal. | 20.0 | 3.0 | 3.0 | 0.050 | Ag | 0.006 | | | 60 |
| 11 | Ex. | Bal. | 20.0 | 3.0 | 3.0 | 0.100 | | | | | 60 |
| 12 | Ex. | Bal. | 20.0 | 3.0 | 3.0 | 0.100 | | | | | 60 |
| 13 | Ex. | Bal. | 20.0 | 3.0 | 3.0 | 0.100 | Co | 0.001 | | | 60 |
| 14 | Ex. | Bal. | 25.0 | 3.0 | 3.0 | 0.100 | Ca | 0.001 | Pb | 0.004 | 60 |
| 15 | Ex. | Bal. | 25.0 | 3.0 | 3.0 | 0.100 | Zr | 0.0001 | | | 60 |
| 16 | Ex. | Bal. | 25.0 | 3.0 | 3.0 | 0.100 | | | | | 60 |
| 17 | Ex. | Bal. | 25.0 | 3.0 | 3.0 | 0.100 | Ni | 0.01 | | | 60 |
| 18 | Ex. | Bal. | 25.0 | 3.0 | 3.0 | 0.300 | | | | | 60 |
| 19 | Ex. | Bal. | 25.0 | 3.0 | 3.0 | 0.300 | P | 0.004 | Bi | 0.001 | 60 |
| 20 | Ex. | Bal. | 35.0 | 6.0 | 3.0 | 0.300 | | | | | 60 |
| 21 | Ex. | Bal. | 35.0 | 6.0 | 3.0 | 3.000 | B | 0.009 | | | 60 |
| 22 | Ex. | Bal. | 20.0 | 3.0 | 3.0 | 0.050 | Sr | 0.01 | | | 60 |
| 23 | Ex. | Bal. | 20.0 | 3.0 | 3.0 | 0.050 | | | | | 60 |
| 24 | Ex. | Bal. | 20.0 | 3.0 | 3.0 | 0.100 | Ce | 0.005 | | | 60 |
| 25 | Ex. | Bal. | 20.0 | 3.0 | 3.0 | 0.100 | Li | 0.01 | | | 60 |
| 26 | Ex. | Bal. | 25.0 | 6.0 | 3.0 | 0.300 | | | | | 60 |
| 27 | Ex. | Bal. | 20.0 | 3.0 | 3.0 | 0.050 | | | | | 60 |
| 28 | Ex. | Bal. | 20.0 | 3.0 | 3.0 | 0.050 | | | | | 60 |
| 29 | Ex. | Bal. | 25.0 | 3.0 | 3.0 | 0.100 | La | 0.003 | W | 0.0001 | 60 |
| 30 | Ex. | Bal. | 25.0 | 3.0 | 3.0 | 0.100 | Sn | 0.02 | Nb | 0.004 | 60 |
| 31 | Ex. | Bal. | 25.0 | 6.0 | 3.0 | 0.300 | Sb | 0.005 | | | 60 |
| 32 | Comp. ex. | Bal. | 5.0 | 0.1 | 3.0 | 0.100 | | | | | 60 |
| 33 | Comp. ex. | Bal. | 5.0 | 0.1 | 3.0 | 0.100 | | | | | 60 |
| 34 | Comp. ex. | Bal. | 5.0 | 0.1 | 3.0 | 0.100 | | | | | 60 |
| 35 | Comp. ex. | Bal. | **0.4** | 0.1 | 3.0 | 0.100 | | | | | 60 |
| 36 | Comp. ex. | Bal. | 5.0 | **16.0** | 3.0 | 0.100 | | | | | 60 |
| 37 | Comp. ex. | Bal. | 5.0 | **0** | 3.0 | 0.100 | | | | | 60 |
| 38 | Comp. ex. | Bal. | 5.0 | 0.1 | 3.0 | **0.004** | | | | | 60 |
| 39 | Comp. ex. | Bal. | 5.0 | 0.1 | 3.0 | 0.100 | | | | | **19** |
| 40 | Comp. ex. | - | - | - | - | - | - | - | - | - | - |

### [Table 1-2]

**Table 1-2**

| No. | Class | Production conditions | | | | | | | Plating structure | | | Steel structure | Evaluation results | |
|---|---|---|---|---|---|---|---|---|---|---|---|---|---|---|
| | | Annealing step | | | Plating step | | | | Fe-Al phase (mass%) | | Area ratio of Mg-Al-Zn-Si-based intermetallic compound phases (%) | Depth with C conc. of 0.10 mass% or less (µm) | Chem. convertibility | Paint blistering |
| | | Dew point (°C) | Temp. (°C) | Time (s) | Plating bath temp. (°C) | Dip-ping temp. (°C) | Average cooling speed down to 480°C after plating (°C/s) | Average cooling speed 480 to 300°C (°C/s) | | | | | | |
| | | | | | | | | | Si | Zn | | | | |
| 1 | Ex. | -50 | 800 | 100 | 660 | 500 | 20 | 10 | 3.2 | 2.1 | 0.010 | 0 | A | A |
| 2 | Ex. | -50 | 800 | 100 | 660 | 500 | 20 | 10 | 3.0 | 2.0 | 0.014 | 0 | A | A |
| 3 | Ex. | -50 | 800 | 100 | 660 | 490 | 20 | 10 | 6.0 | 5.0 | 0.020 | 0 | A | A |
| 4 | Ex. | -50 | 800 | 100 | 660 | 450 | 20 | 10 | 8.0 | 6.0 | 0.030 | 0 | A | A |
| 5 | Ex. | -50 | 800 | 100 | 660 | 400 | 20 | 10 | 12.0 | 15.0 | 0.040 | 0 | A | A |
| 6 | Ex. | -50 | 800 | 100 | 660 | 500 | 30 | 10 | 3.0 | 2.0 | 0.050 | 0 | AA | AA |
| 7 | Ex. | -50 | 800 | 100 | 660 | 500 | 30 | 10 | 5.0 | 2.0 | 0.070 | 0 | AA | AA |
| 8 | Ex. | -50 | 800 | 100 | 660 | 500 | 30 | 10 | 5.0 | 2.0 | 0.080 | 0 | AA | AA |
| 9 | Ex. | -50 | 800 | 100 | 660 | 500 | 30 | 10 | 5.0 | 2.0 | 0.080 | 0 | AA | AA |
| 10 | Ex. | -50 | 800 | 100 | 660 | 450 | 30 | 10 | 5.0 | 4.0 | 0.080 | 0 | AA | AA |
| 11 | Ex. | -50 | 800 | 100 | 660 | 450 | 30 | 10 | 5.0 | 4.0 | 0.130 | 0 | AA | AA |
| 12 | Ex. | -50 | 800 | 100 | 660 | 450 | 30 | 10 | 5.0 | 4.0 | 0.140 | 0 | AA | AA |
| 13 | Ex. | -50 | 800 | 100 | 660 | 450 | 30 | 10 | 5.0 | 4.0 | 0.140 | 0 | AA | AA |
| 14 | Ex. | -50 | 800 | 100 | 660 | 450 | 30 | 10 | 5.0 | 5.0 | 0.140 | 0 | AA | AA |
| 15 | Ex. | -50 | 800 | 100 | 660 | 450 | 30 | 10 | 5.0 | 5.0 | 0.130 | 0 | AA | AA |
| 16 | Ex. | -50 | 800 | 100 | 660 | 400 | 30 | 10 | 5.0 | 5.0 | 0.150 | 0 | AA | AA |
| 17 | Ex. | -50 | 800 | 100 | 660 | 400 | 30 | 10 | 5.0 | 5.0 | 0.170 | 0 | AA | AA |
| 18 | Ex. | -50 | 800 | 100 | 660 | 400 | 30 | 10 | 5.0 | 5.0 | 0.230 | 0 | AA | AA |
| 19 | Ex. | -50 | 800 | 100 | 660 | 400 | 30 | 10 | 5.0 | 5.0 | 0.250 | 0 | AA | AA |
| 20 | Ex. | -50 | 800 | 100 | 660 | 400 | 30 | 10 | 10.0 | 7.0 | 0.250 | 0 | AA | AA |
| 21 | Ex. | -50 | 800 | 100 | 660 | 400 | 30 | 10 | 15.0 | 12.0 | 0.400 | 0 | AA | AA |
| 22 | Ex. | -10 | 800 | 100 | 660 | 500 | 20 | 10 | 5.0 | 4.0 | 0.010 | 0.5 | A | AA |
| 23 | Ex. | -10 | 800 | 100 | 660 | 500 | 20 | 10 | 5.0 | 4.0 | 0.020 | 0.6 | A | AA |
| 24 | Ex. | 0 | 800 | 100 | 660 | 500 | 20 | 10 | 5.0 | 4.0 | 0.030 | 1.0 | A | AA |
| 25 | Ex. | 0 | 800 | 100 | 660 | 500 | 20 | 10 | 5.0 | 4.0 | 0.035 | 1.0 | A | AA |
| 26 | Ex. | 10 | 800 | 100 | 660 | 500 | 20 | 10 | 10.0 | 5.0 | 0.044 | 2.0 | A | AA |
| 27 | Ex. | -10 | 800 | 100 | 660 | 500 | 30 | 10 | 5.0 | 4.0 | 0.050 | 0.5 | AA | AAA |
| 28 | Ex. | -10 | 800 | 100 | 660 | 500 | 30 | 10 | 5.0 | 4.0 | 0.080 | 0.6 | AA | AAA |
| 29 | Ex. | 0 | 800 | 100 | 660 | 500 | 30 | 10 | 5.0 | 5.0 | 0.150 | 1.0 | AA | AAA |
| 30 | Ex. | 0 | 800 | 100 | 660 | 500 | 30 | 10 | 5.0 | 5.0 | 0.160 | 1.0 | AA | AAA |
| 31 | Ex. | 10 | 800 | 100 | 660 | 500 | 30 | 10 | 10.0 | 5.0 | 0.240 | 2.0 | AA | AAA |
| 32 | Comp. ex. | -50 | 800 | 100 | 660 | 520 | 20 | 10 | 1.0 | 0.5 | 0.030 | 0 | A | B |
| 33 | Comp. ex. | -50 | 800 | 100 | 660 | 500 | 10 | 10 | 3.0 | 2.0 | 0 | 0 | B | A |
| 34 | Comp. ex. | -50 | 800 | 100 | 660 | 500 | 20 | 20 | 3.0 | 2.0 | 0 | 0 | B | B |
| 35 | Comp. ex. | -50 | 800 | 100 | 660 | 500 | 20 | 10 | 3.0 | 2.0 | 0.030 | 0 | B | A |
| 36 | Comp. ex. | -50 | 800 | 100 | 660 | 500 | 20 | 10 | 3.0 | 2.0 | 0.030 | 0 | A | B |
| 37 | Comp. ex. | -50 | 800 | 100 | 660 | 500 | 20 | 10 | 3.0 | 2.0 | 0.030 | 0 | B | B |
| 38 | Comp. ex. | -50 | 800 | 100 | 660 | 500 | 20 | 10 | 3.0 | 2.0 | 0.005 | 0 | B | A |
| 39 | Comp. ex. | -50 | 800 | 100 | 660 | 500 | 20 | 10 | 3.0 | 2.0 | 0.030 | 0 | B | B |
| 40 | Comp. ex. | -50 | 800 | 100 | 530 | 500 | - | - | - | - | - | - | - | - |

Referring to Table 1, in Comparative Example 32, the dipping temperature of the plating step was high, therefore in the Fe-Al phase, the desired Si and Zn contents were not obtained and the corrosion resistance after hot-stamp forming fell. In Comparative Example 33, the average cooling speed in the primary cooling from after plating down to 480°C was slow, therefore Mg₂ Si phases formed in a large amount. As a result, the Mg-Al-Zn-Si-based intermetallic compound phases could not be sufficiently made to form and the chemical convertibility fell. In Comparative Example 34, the average cooling speed in the secondary cooling from 480°C down to 300°C was fast, therefore much of the Mg dissolved in the α-Al phase. As a result, similarly the Mg-Al-Zn-Si-based intermetallic compound phases could not be sufficiently made to form and the chemical convertibility fell. In Comparative Example 35, the Zn content in the plating layer was low, therefore at the time of chemical conversion, the reaction with the phosphoric acid did not sufficiently proceed and the chemical convertibility fell. In Comparative Example 36, the Si content in the plating layer was high, therefore in the plating layer after hot-stamp forming, formation of Fe-Al-Si phases in the Fe₂ Al₅ phases became remarkable and as a result paint blistering after hot-stamp forming increased and the corrosion resistance fell. In Comparative Example 37, the Si content in the plating layer was low therefore the adhesion of the plating layer fell and the corrosion resistance after hot-stamp forming fell. In Comparative Example 38, the Mg content in the plating layer was low, therefore Mg-Al-Zn-Si-based intermetallic compound phases could not be sufficiently be made to form and the chemical convertibility fell. In Comparative Example 39, the amount of deposition of the plating layer was not sufficient, therefore the corrosion resistance after hot-stamp forming fell. In Comparative Example 40, the plating bath temperature was low, therefore when the base steel sheet was dipped in the plating bath, the plating bath solidified and a plating layer could not be suitably formed. Therefore, subsequent production was stopped and no analysis or evaluation of performance was performed.

In contrast to this, in each of the plating steel sheets according to all of the embodiments, by controlling the chemical composition of the overall plating layer to within a predetermined range, making the amount of deposition of the plating layer 20 g/m² or more per side, and making make the Fe-Al phase formed at the interface with the base steel sheet contain, by mass%, Si: 3.0 to 15.0% and Zn: 2.0 to 15.0% and further making the main layer positioned on the Fe-Al phase contain Mg-Al-Zn-Si-based intermetallic compound phases with an Al content of 10 mass% or more in an area ratio of 0.010% or more, even when used for hot-stamp forming, due to the combination of the effect of improvement of the corrosion resistance due to the suppression of formation of the Fe-Al-Si phase in the plating layer, the effect of improvement of the corrosion resistance due to the dissolution of Zn in the Fe₂ Al₅ phase, and the effect of improvement of the chemical convertibility due to the modification of the oxide layer by Mg, it was possible to remarkably improve the corrosion resistance of the hot-stamp formed body. In particular, in each of Examples 6 to 21 where the chemical composition of the overall plating layer contained Zn: 10.0 to 35.0%, Si: 0.5 to 6.0%, and Mg: 0.050 to 3.000% and the area ratio of the Mg-Al-Zn-Si-based intermetallic compound phases was 0.050% or more, the chemical convertibility and paint blistering were respectively evaluated as AA and the corrosion resistance was improved more. Further, in each of Examples 27 to 31 where the chemical composition of the overall plating layer contained Zn: 10.0 to 35.0%, Si: 0.5 to 6.0%, and Mg: 0.050 to 3.000%, the area ratio of the Mg-Al-Zn-Si-based intermetallic compound phases was 0.050% or more, and the depth with a C concentration at the surface layer part of the base steel sheet of 0.10 mass% or less controlled to 0.5 µm or more, the chemical convertibility was evaluated as AA, the paint blistering was evaluated as AAA, and the corrosion resistance could be much further improved. Further, each plated steel sheet was analyzed for the main layer, whereupon in the plated steel sheet according to all of the examples, the main layer contained at least one of the α-Al phase, η-Zn phase, and Si phase in addition to the Mg-Al-Zn-Si-based intermetallic compound phases. In particular, in the plated steel sheet according to all of the examples, the main layer contained 50 area% or more of an α-Al phase.

### REFERENCE SIGNS LIST

- 1: plated steel sheet
- 2: base steel sheet
- 3: plating layer
- 4: Fe-Al phase
- 5: main layer
- 6: Mg-Al-Zn-Si-based intermetallic compound phase

## Claims

1. A plated steel sheet comprising a base steel sheet and a plating layer formed on a surface of the base steel sheet, wherein
a chemical composition of the plating layer comprises, by mass%,
Zn: 5.0 to 40.0%,
Si: 0.1 to 15.0%,
Fe: 0.5 to 25.0%,
Mg: 0.005 to 3.000%,
Ni: 0 to 0.500%,
Ca: 0 to 3.000%,
Sb: 0 to 0.500%,
Pb: 0 to 0.500%,
Cu: 0 to 1.000%,
Sn: 0 to 1.000%,
Ti: 0 to 1.000%,
Cr: 0 to 1.000%,
Nb: 0 to 1.000%,
Zr: 0 to 1.000%,
Mn: 0 to 1.000%,
Mo: 0 to 1.000%,
Ag: 0 to 1.000%,
Li: 0 to 1.000%,
La: 0 to 0.500%,
Ce: 0 to 0.500%,
B: 0 to 0.500%,
Y: 0 to 0.500%,
Sr: 0 to 0.500%,
In: 0 to 0.500%,
Co: 0 to 0.500%,
Bi: 0 to 0.500%,
P: 0 to 0.500%,
W: 0 to 0.500%, and
balance: Al and impurities, and
a total content of Ni, Ca, Sb, Pb, Cu, Sn, Ti, Cr, Nb, Zr, Mn, Mo, Ag, Li, La, Ce, B, Y, Sr, In, Co, Bi, P, and W is 5.000% or less,
the plating layer includes an Fe-Al phase positioned at an interface with the base steel sheet and a main layer positioned on the Fe-Al phase,
at a cross-section of the main layer, an area ratio of Mg-Al-Zn-Si-based intermetallic compound phases with an Al content of 10 mass% or more is 0.010% or more,
the Fe-Al phase contains, by mass%, Si: 3.0 to 15.0% and Zn: 2.0 to 15.0%, and
an amount of deposition of the plating layer is 20 g/m² or more per side.

2. The plated steel sheet according to claim 1, wherein
the chemical composition of the plating layer comprises, by mass%,
Zn: 10.0 to 35.0%,
Si: 0.5 to 6.0%, and
Mg: 0.050 to 3.000%, and
an area ratio of the Mg-Al-Zn-Si-based intermetallic compound phases is 0.050% or more.

3. The plated steel sheet according to claim 1 or 2, wherein, in a depth direction of the base steel sheet from an interface of the base steel sheet and the plating layer, a depth where a C concentration is 0.10 mass% or less is 0.5 µm or more.
